# EUROPEAN PATENT APPLICATION

(11) **EP 1 367 514 A1**
(43) Date of publication of application: **03.12.2003**
(21) Application number: 02100576.4
(22) Date of filing: 29.05.2002
(51) Int. Cl.: G06F 17/60

(54) **Method in connection with a spreadsheet program**

(71) Applicant: Framtidsforum I & M AB, 752 28 Uppsala (SE)
(72) Inventor: WALDAU, Mattias, 752 28, UPPSALA (SE)
(74) Representative: Holmberg, Nils Anders Patrik

(57) **Abstract**

A method in connection with spreadsheet programs wherein a spreadsheet is created 102 by a creator 100 on a computer having a display means, an entry device, and a processor for executing the spreadsheet program. The method is adapted to make the spreadsheet accessible to a remote user provided with a target computing environment device, and comprises the following steps:
a) compiling 103 the created spreadsheet in said computer by, in addition to conventional compilation, using a set of submodules, so that the compiled spreadsheet is a representation of the spreadsheet for the target computing environment;
b) transferring the compiled spreadsheet to the target computing environment device, and
c) enabling said remote user to use 101 the created spreadsheet, by using a target processing means in the target computing environment device without using the spreadsheet program.

## Description

### Field of the invention

The present invention relates to a method in connection with spreadsheet programs and in particular to a method that enables an end user to use a spreadsheet without needing the spreadsheet program.

### Background of the invention

Spreadsheets are still one of the most successful software application types and are used by a lot of non-computer experts to solve calculation problems within business and personal finance. Typically uses are accounting, to make budgets, to track project, cash-flow analysis, and presentations. Typically uses within personal finance is keeping track of expenses, budgeting buying a house, supporting hobbies like managing a stamp collection.

A spreadsheet is simply a table or matrix of rows and columns, very similar to an accounting journal. The intersection of each row and column is called a cell. A cell can hold any type of data, including numbers, formulas and texts. The user can define a formula relating these columns and rows, and then the results are automatically calculated as numbers are entered. When changes in some entries are made, the program recalculated the results based on this formula.

The personal computing environment is getting more heterogeneous. It does not only consist of a personal computer like a PC or Macintosh where a spreadsheet program is installed. New computing platforms pop up all the time, for example mobile phones, pagers, PDA, set-top-boxes, digital TV, game consoles, and thin clients like pure web browser computers. Many of these new computing platforms are very small and cannot support big software applications. However, even if the number of computing environments is getting more heterogeneous, many of these share standard software platforms for example Java, HTML/JavaScript, and WML/WMLScript.

Traditionally, spreadsheets have been installed and used on personal computers. However, there is a trend towards more centralized solutions, where the applications reside on a server, and these are accessed thru thin clients. However, how to place the spreadsheet on a server and get a scalable solution is not clear.

Certain spreadsheets, for example Microsoft Excel, has become so advanced that they are used to spread computer viruses. Distributing spreadsheets to colleagues and customers is important. However, many companies have company policies, which prohibit employees to open Microsoft Excel sheets that have arrived with email in order to prevent infection from computer viruses. As a consequence, a distributor cannot send a spreadsheet to its customer in order to help them calculate the price of the distributor's products.
To conclude:
- Spreadsheets are wide spread and solve a lot of problems.
- Spreadsheets are easy to create by non-programmers. It is a programming language that are used by people not trained in software development.
- Spreadsheets are currently limited to a few of all possible computing platforms.
- Spreadsheets are not adapted to be used on servers.
- Some spreadsheets can be used to distribute viruses and some spreadsheets can be used as Trojan software to steal information from a computer.

Thus, spreadsheets are currently limited to a few of all possible computing platforms and spreadsheets are not adapted to be used on servers.

The following table lists a few of the prior attempts to solve these problems:

| | Description | Problems |
|---|---|---|
| 1 | Microsoft PocketExcel, a miniature spreadsheet application that runs on PDAs with Microsoft PocketPC. | Few platforms powered with PocketPC, for example few mobile phones use PocketPC. |
| 2 | Client-server solutions, for example Anywhere Websheet from Applix which uses Java-applets. | These can in principle run on all platforms that support Java. However, even if the solution is smaller than a complete spreadsheet program, the solutions still needs a lot of resources. |
| 3 | Special viewers for spreadsheets. Some viewers only allow the end user to use the spreadsheet, not to change the underlying spreadsheet. Microsoft Excel Viewer is an ActiveX-component that makes it possible to view Excel spreadsheets within a browser. | Only works on Microsoft Windows platforms. Requires you to have a license for Microsoft Excel, so it cannot be used to publish spreadsheets on the web to be used by everyone. |
| 4 | Most word processors can import spreadsheets and convert them to tables. | The interactivity is lost; the table is a snapshot of the current values in the spreadsheet. The end user cannot change any values and let the spreadsheet recalculate. |
| 5 | Formula One ActiveX (Actuate Corporation, CA, USA) is an example of a miniature spreadsheet application, which are designed to be embedded within an application. | Only runs on specific platform, for example either Microsoft Windows or Java. Normally needs a lot of resources, since they support all functionality of a spreadsheet. |
| 6 | Add a Web Services API to a spreadsheet program, for example Microsoft lets you create XML Web Services that lets you access MICROSOFT Excel XP. This makes it possible to use spreadsheets within a server, and let clients accessing it for example using a browser, or other programs accessing it using SOAP. | Requires that you use MICROSOFT Excel on a Microsoft Windows platform. Currently not scalable, since MICROSOFT Excel needs too much resources. |
| 7 | The mobile phone Nokia 9210 communicator lets the user edit MICROSOFT Excel documents. This is implemented by a miniature spreadsheet program that is included in the Symbian OS. | Few platforms are powered by the Symbian OS. |
| 8 | The internet search engine www.google.com can interpret MICROSOFT Excel documents and show them as HTML to the end user when presenting the search result. | The interactivity is lost; the table is a snapshot of the current values in the spreadsheet. The end user cannot change any values and let the spreadsheet recalculate. |
| 9 | US-5,630,126 relates to systems and methods for integrating computations into compound documents that may operate with any conventional document creating system, and preferably implemented using the so-called OpenDoc architecture for compound document construction. This known method provides a mechanism for refreshing computational data linked with a document without requiring the launching of a separate software application program. | This patent is only remotely related to the present invention, since the starting point is not a spreadsheet but a document. The patent then describes how calculations can be added to the document, and how recalculation is done using an object oriented computing environment like OpenDoc. (A similar technique is used by Adobe Acrobat eForms Solution by Adobe Systems Incorporated, CA, US.) |

The main object of the present invention is to allow remote users on a variety of target computing platforms to interact with the spreadsheet even if they do not have the spreadsheet program installed.

A second object of the present invention is to create smart emails, which are emails with built-in validation and calculation, using a spreadsheet. Smart emails can be used to simplify cooperation between employees when solving problems; typical uses are within sales and customer support.

Another object of the present invention is making it possible to insert spreadsheets into arbitrary software applications on a variety of computing platforms without the need of extra spreadsheet software or the need to rewrite the spreadsheet manually using a programming language like Java or C. This will shorten software development time, reduce the cost, and reduce the numbers of bugs introduced during the system development process. For example, at an insurance company might let their insurance expert describe products, package them using the present invention, and deploy them directly. No software developers are needed. The resulting software will also require fewer resources.

### Summary of the invention

The above-mentioned objects are achieved by a method according to the independent claim.

Preferred embodiments are set forth by the dependent claims.

By using the method according to the present invention the spreadsheet is analysed and a representation or a "copy" is created that can be used without the original spreadsheet program used when creating the spreadsheet. The copy will retain the interactive capabilities of the original spreadsheet for the end user. However, the copy is only a viewer, which means that the end user cannot redefine the formulas of the spreadsheet; only the constants can be changed.

In other words: By using a set of submodules the created spreadsheet is packaged in an intelligent way as a so-called representation. The spreadsheet representation is transferred to an end user that has no spreadsheet program and the end user may then use the functions that are implemented in the spreadsheet.

The copy can then be deployed into another program, onto the web or onto other remote devices like PDAs, mobile phones, set-top-boxes.

### Short description of the appended drawings

Figure 1 shows the interaction between the creator using a spreadsheet program and the end user using the spreadsheet according to the present invention.
Figure 2 shows the submodules specifically needed for compilation of spreadsheets according to the present invention.
Figure 3 shows a spreadsheet with several overlapping ranges.
Figure 4 shows a spreadsheet with overlapping disjunctive ranges.
Figure 5 shows the formulas of a simple sample spreadsheet.
Figure 6 shows the spreadsheet of figure 5 using a traditional spreadsheet layout.
Figure 7 shows an example of the quality assurance code when applied to the spreadsheet in figure 5.
Figure 8 shows a method that creates a user interface for a spreadsheet.
Figure 9 shows the spreadsheet of figure 5 as a form.
Figure 10 shows the spreadsheet of figure 5 in a mobile phone using J2ME.
Figure 11 shows the dependencies between the cells in the spreadsheet shown in figure 5.
Figure 12 shows a linear recalculation ordering for the spreadsheet in figure 5.
Figure 13 shows what has to be recalculated if the cell B3 changes
Figure 14 shows what has to be recalculated if the cell B1 changes
Figure 15 shows what has to be recalculated if the cell B2 changes
Figure 16 shows the automatic process from spreadsheet program to the web browser.
Figure 17 shows the automatic process from spreadsheet program to the WAP browser in a mobile phone.
Figure 18 shows the automatic process from spreadsheet program to an email reader.
Figure 19 shows the automatic process from spreadsheet program to the short messaging inbox in a mobile phone.
Figure 20 shows how a software developer integrates the spreadsheet into an application.
Figure 21 shows how to make a spreadsheet available thru Web Services.
Figure 22 shows how the values entered by the end users can be gathered and sent back to the creator.
Figure 23 shows three ways of sending data back from a web browser.
Figure 24 shows how to send data back using short messaging.

### Detailed description of preferred embodiments of the invention

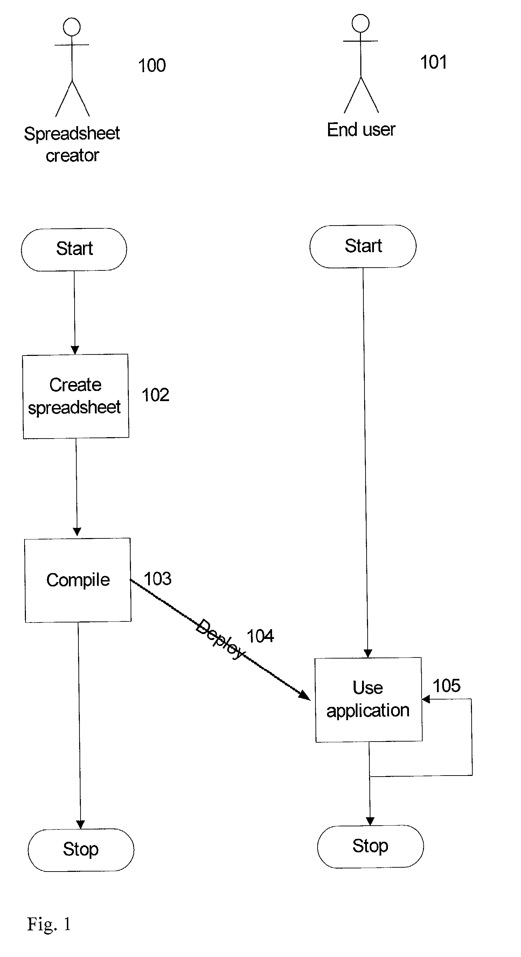

Figure 1 shows the interaction between the creator using a spreadsheet program and the end user using the spreadsheet according to the present invention. There are two users involved, the creator 100 and the end user 101. The creator is going to create a spreadsheet and make it accessible to the end user. First, the creator creates the spreadsheet using his standard spreadsheet program 102. The next step 103 is to use the present invention by compiling the created spreadsheet to create a version of it that can be transferred and made accessible to end-users 101. The end user receives the deployed version from the creator and uses it for his purposes 105. Either the end user only uses the spreadsheet once, or step 105 is repeated several times. The line 104 is the deployment, and we will see that there are many different ways to deploy, for example by sending a HTML-page with embedded JavaScript, a Java applet, and as subpart of a bigger application.

Definition: A *spreadsheet* contains one or more *worksheets.* A worksheet contains zero or more *cells.* A cell either contains a formula, a number or a string. An *active cell* contains data or if it is empty, other cells reference it. Many spreadsheet functions work on many cells at once. Such a group of cells is called a *range.* Normally all cells of a range are on the same worksheet, but a range can span over several worksheets.
The input to the compiler is the spreadsheet and information which cells are input or output. The result is a program that mimics the behaviour of the spreadsheet together with a set of support functions that are needed.

Compiling a spreadsheet to a form that makes the spreadsheet accessible to remote users is partly similar to traditional compilation of programming languages. Parts of the compilation techniques used when implementing the present invention are known to art and are generic, but there are a number of submodules that are unique and developed for the present invention.

According to a preferred embodiment of the present invention the whole compilation step is performed automatically but could also be performed with at least one manual intervention step.

A typical compiler consists of four parts: parsing, intermediate code, optimisation and code generation.
- Parsing: parse (analyse) the spreadsheet and construct an internal representation of it.
- Intermediate code: analyse and transform the internal representation, for example infer the types of the cells, so that code can be generated from it.
- Optimisation: apply different optimisations so that the result needs fewer resources. Optimisations are applied at different stages of the compilation process; for example, it can be applied when transforming the intermediate code. It can also be applied very late in the process, for example so-called peep-hole optimisations are applied on the generated code.
- Code generation: generate a program suitable for the target computing environment.
More details of the general compilation process can be found in compiler construction text books, e.g.: *Compilers : Principles, Techniques, and Tools* by Alfred V. Aho, Ravi Sethi, Jeffrey D. Ullman (Addison-Wesley 1986).

The programming language used by the target computing environment is either a high-level language like Java or Visual Basic or a byte-code language like byte-code for the Java virtual machine (JVM) or the Microsoft Intermediary Language (MSIL) used in Microsoft .NET Common Language Runtime (CLR).

In addition to the representation obtained in the compiling step according to the present invention also so-called support functions are transferred and these support functions are called the run-time library. For example, if the spreadsheet needs to calculate the standard deviation over a set of cells, the run-time library will contain a function for calculating the standard deviation over a set of cells.
The run-time library contains many functions, and only the ones referenced by the spreadsheet program is normally included. This will keep the size down. An alternative is to distribute the complete library, potentially in compiled form, and use it as a shared library. Then, the library is only downloaded once, so the only time its size is a problem is the first time it is needed.

An *input cell* is a cell whose value will be given by the end user, an *output cell* is a cell whose value should be presented to the end user. There are many different ways to define which cells that should be inputs and outputs, for example:
- Unlocked cells are input and all locked cells are output.
- Colour-marking, e.g. the user has marked the output cells red.
- The user can be asked: Which cells are input and which cells are outputs?

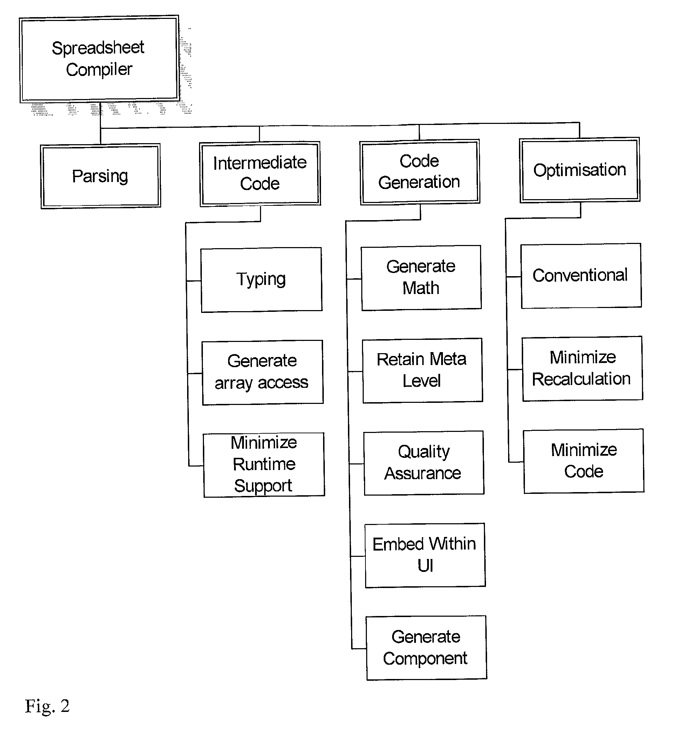

Figure 2 shows the submodules specifically needed for compilation of spreadsheets according to the present invention. Most of these submodules are independent, which means that all of them must not exist in an implementation of the present invention.

By converting the spreadsheet to a programming language like JavaScript in a browser or a Java-applet, which are run within a so-called sandbox, everyone can use them without the risk of viruses or Trojan software. The sandbox ensures that an untrustworthy and possibly malicious application cannot gain access to system resources.

In the following the modules and the submodules of figure 2 will be described in detail.

### Module parsing

This module takes a spreadsheet and creates an internal representation of it. We can either start with a text-representation of the spreadsheet, and then a lexer like GNU FLEX and parser like GNU BISON will parse the cells, or we can start with the binary representation of the spreadsheet. For example, if we would like to compile Microsoft Excel spreadsheets, we can use POI (http://jakarta.apache.org/poi/) or a similar tool to read the binary representation of the Excel spreadsheet. The POI project consists of APIs for manipulating various file formats based upon Microsoft's OLE 2 Compound Document format using pure Java.
Thus, the techniques used for parsing when implementing the method according to the present invention are well known in the art.

### Module Intermediate code

This module is responsible for collecting information about the spreadsheet in order to enable code generation. Example of sought information is
- Which are the active parts of the spreadsheet?
- How depend cells on each other?
- Gather all referenced ranges.
- Which are the types of each cell?
- Prepare for code generation by deciding on how to store cells in the target environment.
The intermediate code module includes at least the following submodules, which will be described below: submodule typing, submodule generate array access and submodule minimize runtime support.

### Submodule Typing

Most spreadsheets are untyped, that means that numbers and strings can be mixed, for example the formula ="12"+3 results in 15. The spreadsheet converts the string "12" to the number 12 before 12 and 3 are summed.
Some spreadsheets enforces one type on all data and in such spreadsheets the formula ="12"+3 would be illegal.
The goal of the present invention is to convert the spreadsheet into some kind of programming language applicable for the target computing environment. The programming language is either untyped or typed.
Examples of untyped programming languages are JavaScript, Python and Microsoft Visual Basic.
Examples of typed programming languages are C, C++, Java, and Standard ML (SML)

When converting a spreadsheet into an untyped programming language, types can be ignored; the target language will make the necessary conversions.

When converting a spreadsheet into a typed programming language, the types have to be handled by the present invention, otherwise the resulting program will not be legal and cannot be compiled or run. There are two solutions of this problem:
1. Do not use the math of the target programming language directly, instead let all numbers and string be an object, with a tag that tells if the type of object is a number or string. All operations look at this tag first and if necessary, convert the type of the data. Details on how to implement this can be found by looking on how untyped programming languages are implemented, for example all the documentation and source code of Python can be found at http://www.python.org/.
2. Try to infer the type of all cells and intermediate results of the spreadsheet and use the math of the target programming language directly.

The advantage of the solution 1 is that it can be used on all spreadsheets, and the disadvantage is that the result is slower and the code is bigger.
The advantage of solution 2 is that the resulting code is very fast and compact. Not all spreadsheets can be typed, and those that can are defined as well-typed.

We have no knowledge of any prior art on how to infer or synthesize types for spreadsheets and how to handle non well-typed spreadsheets.

The types form a type hierarchy, the most general type is Top, two disjoint specializations are String and Number. If a type is both String and Number, it is Bottom.
A value is a cell or an intermediate result. The idea of type synthesis is to let all values have the most general type Top initially. If, in the context where a value is used, a specialization to String or Number is required, then the type of the value is restricted. If a value wants to be both a string and a number, then its type is Bottom. A spreadsheet, where there exist values that are Bottom, is not well-typed. Type synthesis per se is well-known in the art and an efficient implementation on how to do synthesize types can be found in Robin Milner, A *theory of type polymorphism in programming,* JCSS 17 (1978), 348-375 and derivates thereof, for example in descriptions on how to implement SML.

If, after the type synthesis, all values are Strings and Numbers, then the synthesis succeeded and the program can be transformed into a type target programming language.
If, after the type synthesis, there are values that are Top, the type of these can be set to either String or Number.
If, after the type synthesis, there are values that are Bottom, the spreadsheet is not well-typed and we have a problem.
There are two solutions for this problem:
1. Most of these spreadsheets can be made well-typed by introducing conversions between strings and numbers. For example the formula ="12"+3 can be converted to =VALUE("12")+3 where the function VALUE converts a string that represents a number to a number. The resulting spreadsheet is well-typed.
2. The values Top, Bottom, String and Num can be augmented with its context. The context is the position of the type requirements, examples of a context is "the cell D4" or "the 2^{nd} argument of the function call CONCATENATE in the cell D4". The history of the Bottom is the union of the contexts for all the type requirements that resulted in the Bottom. When the history is formatted, we get error messages like "There is a Num in cell 'Sheet1'!D17 The 1th argument of the function call CONCATENATE at 'Sheet1'!F19 wants String in cell(s 'Sheet1'!D17" which tells the user that he either has to change the cell D17 or the cell F19.

Inferring types makes it possible to map spreadsheet formulas more or less directly to a target programming language. For example, if the target language is Java, and the cell A2 contains the formula "=10*cos(A1)" and we have inferred that A1 contains a number, the cell can compiled to the Java expression "float xa2 = 10*cos(xa2);".

The necessary changes to extend the typed inference to handle Boolean are straightforward.

Inferring types makes it possible to convert the spreadsheet into a typed programming language. However, it is also useful to apply type synthesis just to increase the quality of the spreadsheet. Very seldom it is the author's intention to mix strings and numbers.

The inferred types can also be used to improve the user interface, since if we know the input is a number, then we only need to allow digits and dot during input.

### Submodule generate array access

Spreadsheets contain many cells, for example in Microsoft Excel one single sheet can contain 256*65 536=16 777 216 cells, and there can be thousands of sheets in a single workbook. Just allocating an array to handle a single sheet would require 64 Mb memory, which even for modern computers is a problem. However, most of these cells are empty.

There are at least two different approaches to store cells, which should be obvious to a trained computer scientist:
1. Allocate one variable per cell. A possible improvement is to allocate only variables to cells, which are referred later.
2. Use a sparse array. A sparse array is an array that doesn't allocate memory for unused positions.
The problem with approach 1 is that it does not coexist with a general library of functions for SUM, AVERAGE, and all other functions used by a spreadsheet.

The problem with approach 2 is that with few exceptions, JavaScript is one, sparse arrays is not natively supported by most programming languages. This means that separate library code for handling sparse arrays has to be included in the final result. Also, since cells can either contain strings and numbers, either the same sparse array must be able to store strings and numbers, or two sparse arrays are used, one for strings and one for numbers.

We will show that allocating a combination of variables, vectors, and two-dimensional and three-dimensional arrays will result in both an efficient and compact representation that makes calling library functions easy. A vector is a one-dimensional array.

Definition: A range x is a *subrange* of another range y if all the cells of x are cells of y.
The *topmost range* of a set of ranges is a range, which is not a subrange of any of the other ranges. There might be more than one topmost range, then just pick an arbitrary.

A special method called "Allocate Store Method" is provided according to the invention in order to allocate store for cells of a spreadsheet using variables, vectors or arrays according to the present invention:
1. For each formula, collect its references to other cells and ranges. Call this set the references.
2. For each reference in references, perform:
   a. If a range refers to a single cell, and the cell is not included in any other of the references then make a single variable of it.
   b. If a range refers to a single cell c, and the cell is included in another range in the references, then find the topmost range t the cell c is included in. The value of that cell c will be stored in the store of this range t.
   c. If a range r is a one-dimensional, i.e. its height or width is one, and the range is not a subrange any other range in references, then store the cells of the range in a vector.
   d. If a range r is a one-dimensional, i.e. its height or width is one, and the range r is a subrange of another range in references, then find the topmost range t the range r is included in. Store the values of the range r in the store of the range t.
   e. If a range r is a two-dimensional, i.e. both its height and width is larger than one, find the topmost range t the range r is included in. Store the values of the range r in the store of the range t.
   Note: If the typing is used, then the method above has to check that the range and the subrange have the same type, since a vector or array can only contain either numbers or strings. Thus, the number 123 can occur in two arrays, once as the number 123, and once as the string "123".

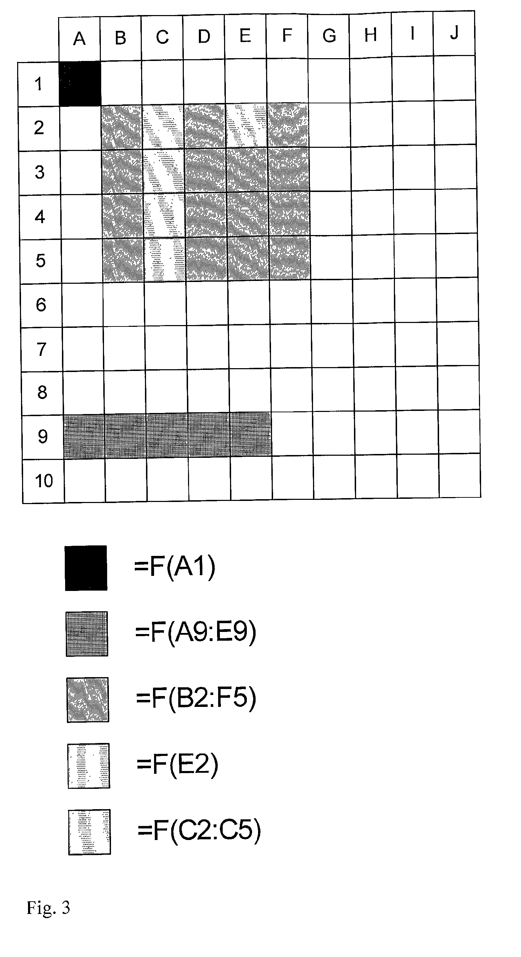

Figure 3 shows a little spreadsheet, five formulas =F(A1), =F(A9:E9), =F(B2:F5), =F(E2), and =F(C2:C5) refers to different areas between A1 and J10. The symbol F stands for any function name, for example SUM. For simplicity, assume that these are the only formulas that refer to this range, and also assume that only non-white cells contain any formulas or data. The problem is now to represent the area between A1 and J10 using variables, vectors, and arrays. When applying the method above to the spreadsheet in figure 3 this is the result:
- A1 will be stored in a variable var1,
- A9:E9 will be stored in a vector vect1 with 5 elements,
- B2:F5 will be stored in an array arr1 with 5*4=20 elements,
- E2 will be stored in arr1, its relative position to the start of arr1 is 3 and 0, and
- C2:C5 will be stored in arr1, its relative position to the start of arr1 is 1 and 0.

So in this example, we needed 1+5+20=26 memory locations to store all the values of the 26 active cells. For typical spreadsheets, the method above will be able to store the cells in a minimum amount of memory locations.

All high-level functions like SUM; STDDEV are defined in the runtime library. The argument types can either be a single value, a vector, or an array. In order to be able to call with parts of a vector or a part of an array, the range has to be sent to the library function. One example is
- Vector: vector, start position, and end position
- Array: array, topmost leftmost position, bottommost rightmost position.
We call the first position in a vector or array the 0^{th} position.

For example, assuming there is a function called F
- =F(A1) becomes F(var1)
- =F(A9:E9) becomes F(vect1, 0, 4)
- =F(B2:F5) becomes F(arr1, 0, 0, 3, 4)
- =F(E2) becomes F(arr1, 3, 0, 3, 0)
- =F(C2:C5) becomes F(arr1, 1, 0, 3, 0)

Thus, without needing sparse arrays, the values of the cells in a spreadsheets can be stored in a very memory efficient manner. Most languages support variables, vectors, and arrays, so the method is generic.
Also, the representation makes it easy and compact to call functions in the run-time library.

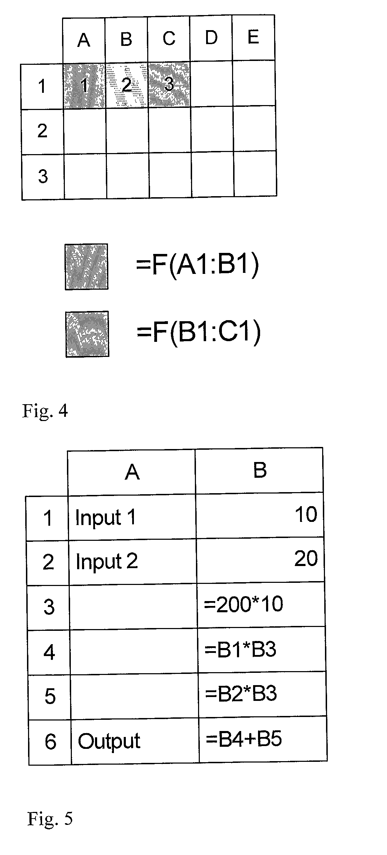

If the Allocate Store Method previously presented is applied to figure 4, the cell B1 will exist in both vectors. There are three different approaches applicable to solve this problem:
1. Calculate the value twice; just copy the formula to each location.
2. Make one of the positions master, calculate its value, and then copy the result into all the other occurrences. The other occurrences are called slaves.
3. Create a larger range so that the ranges are subranges of this larger range. For example, in figure 4, we have the two subranges A1:B2 and B1:C3, and the larger range is A1:C1.

Applying approaches 1 or 2 on figure 4, we would have two vectors vect1 and vect2 with two elements each, and the calls would be F(vect1, 0, 1) and F(vect2, 0, 1). Applying approach 3 on figure 4 we would have one vector vect1 with 3 elements, and the two calls F(vect1, 0, 1) and F(vect1, 1, 2).

Approach 3 reduce the amount of calculation or copying that has to be done, and also reduces the memory requirements for storing the cells. Approach 2 is normally best if there are a lot of empty cells within the larger range when using approach 3.

### Submodule Minimize runtime support

The values of the cells are stored in variables, vectors or arrays. Some spreadsheet functions can only be applied to a single value, for example the trigonometric function cosine called COS, some can be applied to all types of argument, a single value, a vector or an array. One example is AVERAGE, which calculates the average of a set of cells. Also, some functions can be called with one or more arguments.

Since, as shown previously, a vector argument and an array argument are different, this would require a large set of definitions for just a single function. This would increase the size of the run-time library.

For example, just to handle the spreadsheet function AVERAGE up to 2 arguments would require 12 different functions:
1. single value
2. vector
3. array
4. single value, single value
5. single value, vector
6. single value, array
7. vector, single value
8. vector, vector
9. vector, array
10. array, single value
11. array, vector
12. array, array
Even if only the needed functions are included in the run-time library, in a worst-case scenario all these 12 versions had to be included in the run-time library. Thus, the result is not compact.

The solution is to promote cells to vectors or arrays, and vectors to arrays, when their use requires it. This means that the functions only has to handle array arguments, and that handle single values or vector arguments is optional. The 12 versions for AVERAGE can be reduced to 2 versions:
1. array
2. array, array

Implementing this is straightforward using the above-mentioned Allocate Store Method that is enhanced with a step 1.5.

1.5. For each reference in references, perform:
a) if the reference is a single cell and it is used as argument to a spreadsheet function that requires a vector argument, then store the cell in a vector of size 1.
b) if the reference is a single cell and it is used as argument to a spreadsheet function that requires an array argument, then store the cell in a array of height 1 and width 1.
c) if the reference is a vector and it is used as argument to a spreadsheet function that requires an array argument, then store the cell in a array where either the height is 1 or the width is 1 and the other dimension is the size of the vector.
d) otherwise, do not change the representation of the reference.

Applying this enhanced method to figure 3, and assuming that only F takes an array argument, the cells will be stored in the following arrays:
- A1 will be stored in a variable arr1 with 1^{*}1=1 element,
- A9:E9 will be stored in a vector arr2 with 1*5=5 elements,
- B2:F5 will be stored in an array arr3 with 5*4=20 elements,
- E2 will be stored in arr3, its relative position to the start of arr3 is 3 and 0,
- C2:C5 will be stored in arr3, its relative position to the start of arr3 is 1 and 0.
And the formulas will be
- =F(A1) becomes F(arr1, 0, 0, 0, 0)
- =F(A9:E9) becomes F(arr2, 0, 0, 0, 4)
- =F(B2:F5) becomes F(arr3, 0, 0, 3, 4)
- =F(E2) becomes F(arr3, 3, 0, 3, 0)
- =F(C2:C5) becomes F(arr3, 1, 0, 3, 0)

Only one instance of F is needed to handle all calls to F with one argument. The benefit of this method is that the size of the run-time library is kept down. By keeping the size down, less will have to be distributed to the remote users of the spreadsheet.

### Module Code generation

The code generator module has the difficult task of translating the elements recognized by the parsing module into something that can be executed in the target computing environment.
The resulting code may have rather different structures, depending on the target computing environment.
1. With user interface:
   a. Heterogenous solution, for example JavaScript + HTML.
   b. Homogenous solution, for example Java + AWT.
2. Without user interface:
   a. Source code, for example a Java source file to be embedded into an application and is compiled.
   b. Ready to use component, for example compiled COM-component or compiled Java-class-file.
The method according to the present invention emphasizes in particular code generation and optimisation techniques for spreadsheets that require few resources.
The code generation module includes at least the following submodules, which will be described below: submodule generate math, submodule retain meta level, submodule quality assurance, submodule embed calculations within a user interface and submodule generate component or class.

### Submodule Generate math

A spreadsheet may contain errors. For example, a formula might try to divide a number by zero, another formula might try to find the average of an empty range. There are two ways of handling these kinds of errors:
1. Abort the calculation of the spreadsheet, and let the user correct the error.
2. Continue the calculation with some error result.

Spreadsheets have by tradition selected to continue the calculation, and returning values like #N/A, #RANGE, #NULL. Programming languages on the other hand have traditionally aborted by throwing exceptions.

The goal of the present invention is to mimic the behaviour of the spreadsheet. Thus, we need to be able to continue the calculation and handle errors like #N/A, #RANGE, and #NULL. One solution is to implement the calculations performed by the method according to the present invention in the same way as spreadsheets like Gnumeric is implemented. In Gnumeric numbers and strings are wrapped by an object or structure such that the value can be either a number, a string, or a special value like #N/A, #RANGE, and #NULL. The disadvantage of this solution within the context of the current invention is that the resulting code and the library would be bigger and slower.

Modern floating point arithmetic like IEEE 754 supports special numbers like positive infinity, negative infinity and not a number (NaN). In general, whenever a NaN participates in a floating-point operation, the result is another NaN.

*INSIDE MACINTOSH: PowerPC Numerics,* published March 1994 by Addison Wesley Longman, Inc writes regarding NaNs:
"This program fragment demonstrates the principal service performed by NaNs: they permit deferred judgments about variables whose values might be unavailable (that is, uninitialized) or the result of invalid operations. Instead of having the computer stop a computation as soon as a NaN appears, you might prefer to have it continue if whatever caused the NaN is irrelevant to the solution."
"This is another example of the way arithmetic that includes NaNs allows the program to ignore irrelevancies, even when they cause invalid operations. Using arithmetic without NaNs, you would have to anticipate all exceptional cases and add code to the program to handle every one of them in advance. With NaNs, you can handle all exceptional cases after they have occurred, or you can simply ignore them, as in this example."

The goal of NaN is to let the computation go on, and to make the code simpler by not having to "anticipate all exceptional cases and add code to the program to handle every one of them in advance".

NaN and the error codes of a spreadsheet are solving the same problem. They let the calculation go on. Thus, by mapping all error values like #N/A, #RANGE, #NULL to the single value NaN, we mimic the behaviour of a spreadsheet.

This mapping is done in the following way:
1. Normal arithmetic formulas are not affected at all, since NaN will automatically propagate thru them.
2. Functions in the library, for example VLOOKUP, have to look at some or all of their arguments, and return NaN if any of the arguments is NaN.
3. Functions in the library, for example VLOOKUP, have to return NaN if an error occurs during the execution of the function.

One problem with the method above, where only a single NaN-value is used, is that the end user will not see any difference between the different error values.

In *What Every Computer Scientist Should Know About Floating-Point Arithmetic,* published in the March, 1991 issue of Computing Surveys, David Goldberg writes:
"In IEEE 754, NaNs are often represented as floating-point numbers with the exponent emax + 1 and nonzero significands. Implementations are free to put system-dependent information into the significand. Thus there is not a unique NaN, but rather a whole family of NaNs. When a NaN and an ordinary floating-point number are combined, the result should be the same as the NaN operand. Thus if the result of a long computation is a NaN, the system-dependent information in the significand will be the information that was generated when the first NaN in the computation was generated. Actually, there is a caveat to the last statement. If both operands are NaNs, then the result will be one of those NaNs, but it might not be the NaN that was generated first."

Thus, according to an advanced implementation of the current invention errors codes like #N/A, #RANGE, #NULL may be distinguished by encoding them by different NaN-numbers.
Note that instead of using the special number NaN, other special numbers like positive or negative infinity can be used.

The relationship between NaN and the error codes in a spreadsheet is used in US-5,633,998 (Method for compiling formulas stored in an electronic spreadsheet system). However, the object in the US-patent is different than ours, since they want to speed up recalculations of a spreadsheet by compiling individual cells to machine code.
The advantage of the present invention is that we retain the semantics of the spreadsheet at a very low cost in terms of run-time speed and size of the code.

### Submodule Retain meta level

In spreadsheets there is a special set of functions that is used to define cells on a meta-level. These are called lookup and reference functions. Examples of these are ADDRESS, COLUMN, HLOOKUP, INDEX, INDIRECT, LOOKUP, ROW and TRANSPOSE.
The compilation process of a spreadsheet will, according to the present invention, remove the meta-level. Thus, in the resulting code, there is no way of knowing that a specific value comes from a specific cell like e.g. B6. However, some functions require this information and then this submodule retains the meta-level or reintroduces the meta-level if necessary.

Meta-level functions can be grouped into three categories:
1. A function like INDEX, LOOKUP, HLOOKUP returns an element from a range.
2. A function like OFFSET, COLUMN and ROW has a cell as an argument, but do not want the value, but its position in the spreadsheet.
3. A function like INDIRECT is called with a string that refers to a cell, and then returns an element from an arbitrary cell in the spreadsheet.

The first category can be handled as any built-in function, i.e. it is compiled in the same way as functions like SUM and STDDEV.

The second category is handled during the analysing phase of the compilation. For example =COLUMN(N20) is directly replaced by 14, since "N" in "N20" refers to the 14^{th} column.

The third category is solved by adding a function that is specific for the spreadsheet. This function converts a string representing a cell into its value. For example: a call to INDIRECT might look like =INDIRECT("R" & (B11+10) & "C" & (B 12+4)), where the result depends on the contents of B11 and B12. If both are 1, the cell referenced is "R11C5", and the result is the contents of that cell.

### Example:

Assume that figure 3 shows all the cells used in the spreadsheet, and that the cells are put into the following variables, vectors and arrays:
- A1 becomes var1
- A9:E9 becomes vect1[4] with 5 elements 0 to 4
- B2:F5 becomes arr1[3,4 with 20 elements from (0, 0) to (3, 4)
- E2 is stored in arr1[0, 3], and is automatically handled by arr1
- C2:C5 is stored in arr1[1, 0] to arr1[3, 0] ], and is already handled by arr1

The function could for example be implemented as: 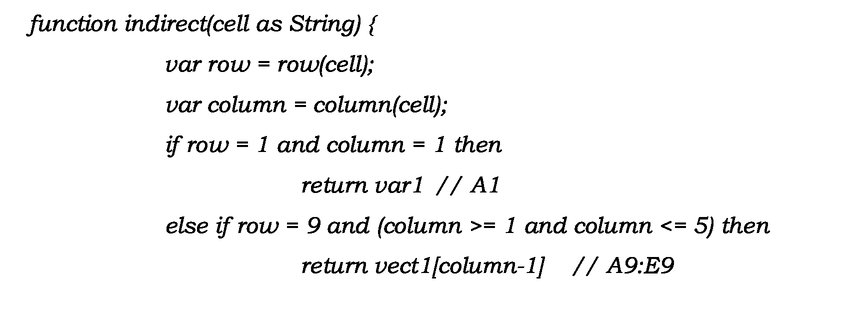 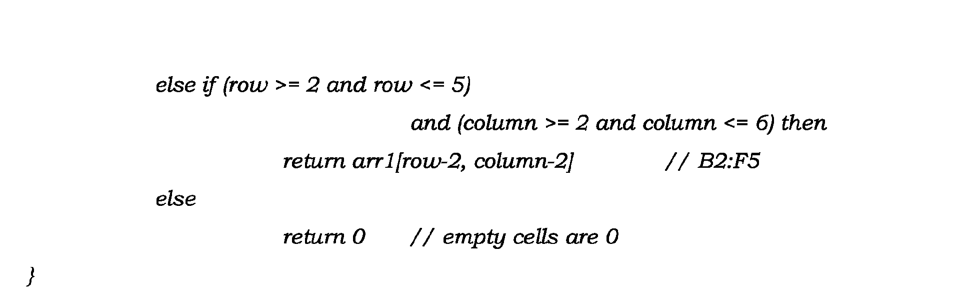 where the function row and column extracts the row and column from the string. The argument to the INDIRECT function in most spreadsheets can either be of the type "A1" or "R1C1", and in order to handle that, INDIRECT has an extra argument handling this difference.

Coding INDIRECT as a function using explicit if-then-else or a switch statement works well if the number of data structure are few. In this case it were three: var1 vect1 and arr1 However, for large spreadsheets, it is better to store the arrays in an efficient manner so that searching is not O(n), but O(log n). One example would be a sorted array and search using binary search.

This submodule shows how to implement the lookup and reference functions in a very compact way. Also, all functions except INDIRECT will have very good performance. The performance of INDIRECT depends on the algorithm selected to implement it.

### Submodule Quality assurance

Spreadsheets have existed for 25 years. Many functions are still unchanged since the first spreadsheet. Every new spreadsheet vendor has invented some new functions and spreadsheets of today contain hundreds of functions. Many borderline cases of the functions are rather strange and it is very difficult to get a precise definition of all functions. Some functions are actually incorrect for certain cases; however, in order to be backwards compatible, the incorrect semantics of the functions are kept. The current spreadsheet users have accepted these problems, and the spreadsheet users would not appreciate correcting these bugs.

As a consequence, creating correct libraries is a challenge, and since the libraries will have to be created once for every target platform, i.e. one library for JavaScript, one for Java, one for C#, etc. Of course, thorough testing before releasing the current invention will find many problems. However, some remaining problem will be rare, and only occur for a few users.

As described above a spreadsheet consists of cells, where each cell is either a constant, or a formula. A cell that contains a formula also contains the result of calculating the formula. This result has been calculated by the original spreadsheet program, and is always a part of the cell. This result can be used for making sure that the result of the present invention calculates in the same way as the original spreadsheet program used.

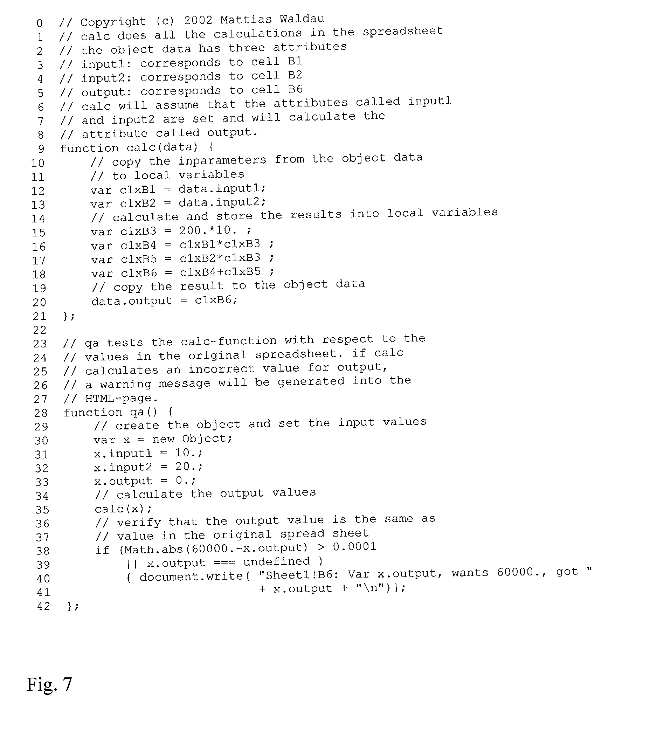

The method is as follows:
1. Compile the spreadsheet to the target computing environment according to the present invention.
2. Create a complete program that
   a. Sets the inputs of the result from step 1 with the corresponding values from the spreadsheet
   b. Execute the result of step 1
   c. Compare all the outputs of the result from step 1 with the corresponding values from the spreadsheet. If they differ, the semantics of the original spreadsheet and the result of step 1 is not identical.
The method is illustrated in figure 7. When applying the current invention on the spreadsheet in figure 5 and selecting the target computing environment as JavaScript and HTML, lines 0 to 22 is the JavaScript-part of the result. Lines 23 to 42 is an example on how to verify that the function called calc in lines 0 to 22 calculates the same value as the original spreadsheet. The function called qa in lines 23-42 will setup all input parameters to 10 and 20 according to the original spreadsheet (lines 29-33), call the function called calc (lines 34-35), and verify that the result is 60000, which is the value calculated by the original spreadsheet (lines 36-39). If the result differs too much from the wanted result, an error message is generated and presented to the user (lines 40-41).

The code shown in figure 7 is just a sample. Examples of variations of the code is name the functions differently, instead of communicating using an object, communication by adding arguments to the functions. If there are many arguments, arrays or lists can be used. Also, the functions must not exist directly, instead all the code can be put on the top-level in the result. All these variations are obvious to a person skilled in the art of programming.
By letting all cells with constants be input cells, and all cells with formulas be output cells, every calculation of the spreadsheet will be tested, regardless of whether it is needed or not in the final result.
This method can be made better by having several instances of the same spreadsheet, each with different sets of input and output values.
This method will make it possible for users to find problems early. Also, it also makes it easy for users of the current invention to report bugs. Just create a spreadsheet, whose current inputs results in incorrect outputs, and send this spreadsheet to the vendor.

### Submodule Embed calculations within a user interface

The resulting code according to the present invention will probably be used within the following different contexts:
1. Embedded within a user interface program and used directly by an end user.
2. Embedded within some kind of component technology like CORBA, COM, or Web Services and called from other programs.
3. Embedded as source code within a computer application.

The second and third cases will be described in connection with submodule generate component or class.

Let us look at how to handle the first case, where the calculation is embedded beneath a user interface that can directly be used by the end user.

The structure of a graphical user interface is the same regardless of platform or technology. It is the same; independent whether it is a graphical Microsoft Win32-application, a user interface shown in a browser or a Java Swing-application.

The user interface contains a number of standard user interface components or widgets like labels, buttons, text boxes, check boxes, radio buttons, list boxes, pull-down menus, tool tips etc. When the user actions affect the components, for example the focus moves to a text box, or when the user edits the textbox, or if the user selects another value in a pull-down menu, events are sent. These events are connected to functions, which are executed in response to the event. For each input and output of the spreadsheet, a corresponding user interface component will be generated. The outputs will normally be connected to simple components like labels or textboxes, since they are only used for update. For each input, the event that signals that the value of the component has changed, will be connected to a function that recalculates all or some of the outputs and updates the user interface. Also, if the input requires special validation, the event for change contents or validation will be connected to a function that ensures that the value entered is legal. Examples of validations are only numbers allowed, only numbers within a certain range allowed, only "Yes" or "No" allowed.

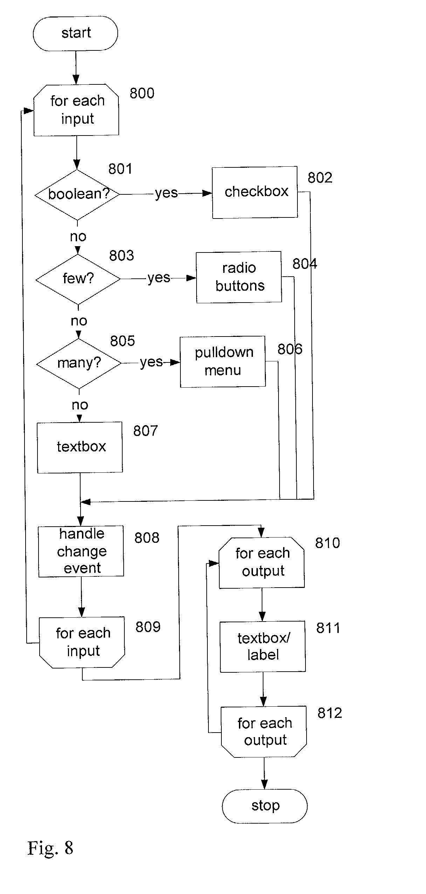

Figure 8 illustrates the method in more detail. The steps between 800 and 809 are repeated for each input cell. In 801 we check if the input parameter is a Boolean, if so, the corresponding graphical component is a checkbox (802). If the number of valid values of the input cell is few (803), typically fewer than 5, then radio buttons are selected as graphical components (804). If there are many, but a fixed set of input values (805), then a pull-down menu is used (806). Otherwise, a textbox that can take arbitrary input is used (807). After that the graphical component is created, a function is connected to the event that happens when the user changes the contents of the graphical component (808). This function makes all necessary recalculations and updates the graphical components showing the outputs parameters. The step 811 between 810 and 812 is repeated for each output cell. The output parameters are shown in a textbox or a label.

This method can be varied in many ways, for example for input parameters the following variations are a few out of many possible:
- Never create radio buttons, create a pull-down menu instead.
- Only use textboxes.
- Use specialized controls for certain data types, for example for dates use a date picker that helps the user select a valid date. For numbers, only allow digits as input. The data type is either inferred by the type inference system, or it is defined by the creator of the spreadsheet.
- Graphical inputs: for example use a slider to enter a number between 0 and 99.

For output parameters, there are many alternatives to simple textboxes or labels:
- Use read-only radio buttons to present the result if only few values are possible
- Use a checkbox if the answer is yes/no or true/false
- Graphical outputs: For example instead of presenting 90%, present a image showing a pie chart with a 90% piece can be presented.

These graphical components can either be grouped as the original spreadsheet, with borders between, or they can be stacked so that the result is a traditional form.

In many spreadsheet programs, there are a lot of additional properties associated with a cell. Examples are:
- Locked: the cell cannot be changed.
- The size of a cell.
- Formatting of the number in the cell, for example the number of decimal numbers and present negative numbers in read.
- Graphical layout of a cell, for example the color of the text, the color of the background, the type of borders around the cell. The color can also depend on the value of the cell, for example, values below 10 should be green, values between 10 and 20 orange, and values above 20 should be red.
- Validation: There are many different forms of validation. Some examples are:
   o Only allow certain predefined values. Normally these are selected from a pull-down menu.
   o Number must be within a predefined range.
   o Only whole numbers are allowed, no decimal numbers.
   o Text must have a specified size.
   o Dates have to be within a certain range.
   o Number must be within a calculated range.
   o Whether or not a value is allowed is decided by calculating a formula. The formula calculates a logical value (TRUE for valid entries or FALSE for invalid).

These additional properties are also handled by the present invention. Formatting and coloring are done before putting the values into the user interface.
Validation is handled by functions that are triggered when the end user changes the input parameters. Some of the validations, for example range, might be supported directly by the target computing environment. Others, for example where validation is done by a formula, are more complex. The formula is compiled as any other formula in a cell, and that formula is called by the end user changing the cell. If the formula returns true, everything is fine, if the formula returns false, the end user has to try again and enter a valid entry.

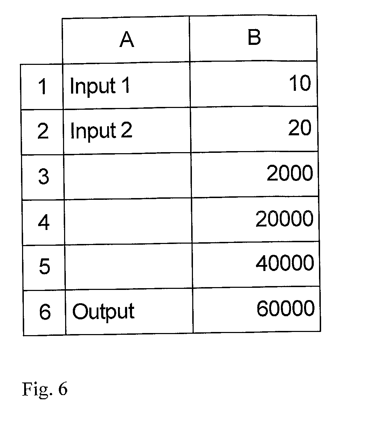

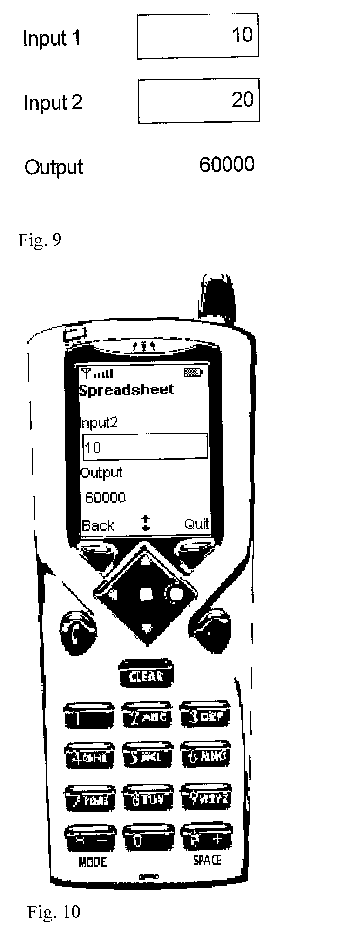

Figure 6 shows the result the method, if the user decides to keep the layout of the original spreadsheet shown in figure 5. Figure 9 shows the result, if the user to just presents the input and output cells in a standard form layout.

Java 2 Micro Edition (J2ME) is a Java created for the vast space of networked consumer and embedded devices, from smart cards, pagers, and mobile phones, to set-top boxes and automobile navigation systems. Figure 10 shows the result when the method in figure 8 is applied to Java 2 Micro Edition (J2ME) and the Mobile Information Device Profile (MIDP).

The control javax.microedition.lcdui.ChoiceGroup is used for check boxes and radio buttons, javax.microedition.lcdui.List is used for pulldown menues, javax.microedition.1cdui.TextField is used for textboxes. There are also a number of specialized controls available, for example for entering a date javax.microedition.lcdui.DateField can be used.

The above method is applicable for many different computing platforms, for example:
- HTML with embedded JavaScript to do the calculations.
- WML with embedded WMLScript to do the calculations.
- Java with AWT and Swing.
- Microsoft Visual Basic version 6.
- Microsoft .NET with Windows Forms
- Adobe Acrobat with embedded JavaScript to do the calculations.

By automatically generating a user interface from a spreadsheet, it is very easy for the creator of a spreadsheet to transfer it to an end user and let the end user make the calculations.

### Submodule Generate component or class

The spreadsheet can be packaged as a class or component. There are two typical structures of the interface: one method per input and output cell, or a single method with a lot of arguments.

### Method 1: Generate one method per input and output cell

1. For each input cell named XXX,
   a. if the cell contains a number, then generate a method setXXX with a single number argument. The method does not return anything.
   b. if the cell contains a string, then generate a method setXXX with a single string argument. The method does not return anything.
2. For each output cell named XXX,
   a. if the cell contains a number, then generate a method getXXX without any argument. The method returns the number.
   b. if the cell contains a string, then generate a method getXXX without any argument. The method returns the string.
3. Generate a single function called calculate.

### Method 2: Generate one single method/function called calculate

1. For each input cell named XXX,
   a. if the cell contains a number, then add a by-value number argument to calculate.
   b. if the cell contains a string, then add a by-value string argument to calculate.
2. For each output cell named XXX,
   c. if the cell contains a number, then add a by-ref number argument to calculate.
   d. if the cell contains a string, then add a by-ref string argument to calculate.
4. Generate code for the method/function called calculate

Simultaneously with generating the interface, and interface description using for example MIDL (Microsoft interface definition language), OMG IDL (Object Management Group Interface Definition Language), or Web Services Description Language (WSDL), so that the class/component can be used directly by another application. This is especially useful if the generated code is directly executable, for example by generating code for the Java virtual machine (JVM) or the Microsoft Intermediary Language (MSIL).

### Module Optimization

The goal of code optimization is to reduce the size and/or execution time of the code produced. It is usually impossible to find an optimal solution, as a space-time tradeoff has to be made. Optimizations can be local or global: They can cover a single statement or an entire program. Global optimization is much more difficult and can cause problems.

The optimization module includes at least the following submodules, which will be described below: submodule conventional code optimizations, submodule minimize recalculation, submodule minimize code and submodule minimize size of runtime functions.

### Submodule Conventional code optimizations

Many optimizations techniques described in books about compiler construction may be applied to the present invention, examples are constant-expression evaluation or constant folding, copy propagation, algebraic simplifications, common sub-expression elimination, code hoisting, if-simplifications, dead store elimination and code in-lining.
Most of the optimizations above will result in smaller or faster code, or both. Thus, these optimizations are important in order to be able to use the resulting spreadsheets on many different platforms.
For example, we reduce the amount of storage needed by applying code inlining and dead store elimination. Normally each cell will use one position in an array, vector or variable. By using the standard optimization techniques code inlining and dead store elimination, we can get rid of this storage. First we inline the contents of the cell at all locations it is referenced, and since the storage is not referenced anymore, we can get rid of it. Code inlining is always good when the callee is only used by one caller or the callee's code is not greater than the call necessary to call it. This optimization is considered obvious for a skilled practitioner in compiler construction.

### Submodule Minimize recalculation

A spreadsheet consists of cells with formulas, numbers and string. When recalculating the spreadsheet, we have to find an ordering of the formulas, so that all values needed by a formula are already calculated. How to do this is known in the art. For example Alan G. Yoder and David L. Cohn, University of Notre Dame writes in *Spreadsheet Languages, Intension and Dataflow* the following "The principles are pretty simple: first of all, one wants to avoid unnecessary recomputation. This leads immediately to the idea that cells (the unit of computation in spreadsheets) should be recalculated in topological order of their dependencies."
Figure 5 contains a little sample of a spreadsheet with 2 numbers and 4 formulas. Figure 6 shows the values shown to the user after recalculation.

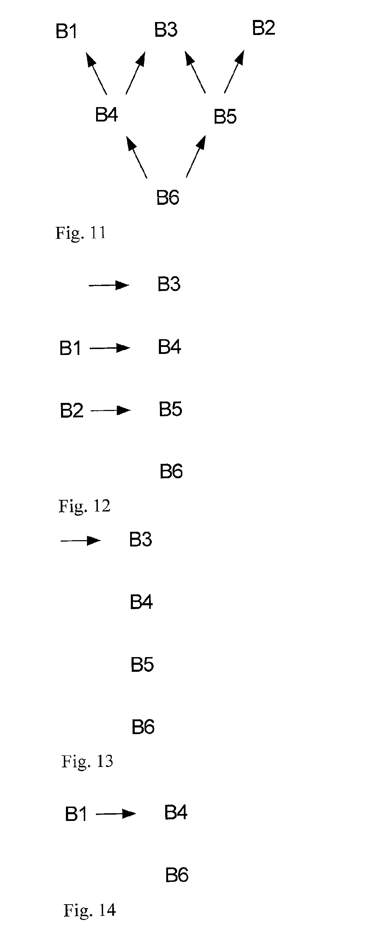

Figure 11 shows the dependencies between the cells, for example the cell B4 depends on the cells B1 and B3, and the cell B6 depends on the cells B4 and B5. That means that before the value of cell B6 can be calculated, the values of B4 and B5 must be calculated first.

A traditional implementation of a spreadsheet consists of two parts: the spreadsheet data and an interpreter. Whenever a cell is changed the interpreter updates the cell and all cells that depend on that cell. For example, if the user changes the value in cell B2 to 50, the interpreter will recalculate the cell B5 and B6. Note that cell B4 is not recalculated since it does not depend on the cell B2.

However, these techniques are not applicable in the present invention, since we are compiling the spreadsheet into a programming language. We do not want to keep the separation between the spreadsheet data and an interpreter.

B1, B2 input cells, (all cells with strings or formulas are potential input cells, the end user can decide if all or some of these should be designated as input cells and which should be designated as constants).

There are normally many topological orders for the cell. We order the calculations so that input cells are placed as far down as possible in the recalculation chain, i.e. further down in the dependency tree the formulas should depend on the input values.

There are two different ways to generate code, either make one linear code, or retain the tree structure.

The linear version is exemplified in figure 12, the code consists of code for calculating B3, followed by code for calculating B4, followed by code for calculating B5, and at last code for calculating B6. If this is the first calculation, the execution starts at B3. If a new value is entered into B1, the execution starts with B4, and if a new value is entered into B2, the execution starts at B5. The disadvantage is that B5 is unnecessarily recalculated whenever B1 changes.

Jumping into the correct location of the code can be implemented in many different ways depending on the programming language. For example IF-statements can be used, jump-tables, or in the C-programming language and alike the switch-statement can be used.

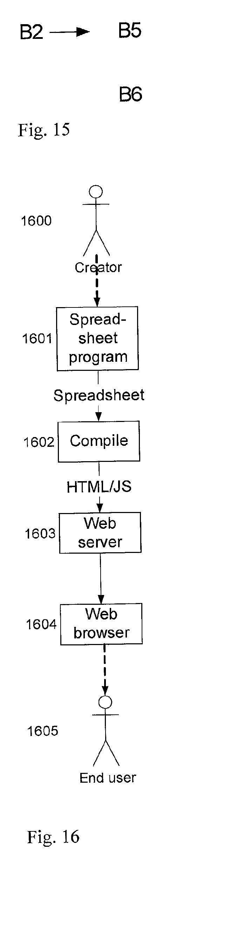

The tree model is exemplified in fig. Figure 13, figure 14, and figure 15. The code is split up into small pieces. A function or subroutine is created for each piece. Only those needed are called after a change. Figure 13 shows which functions or subroutines that has to be called the first time: B3, B4, B5, B6. Figure 14 shows the case when the user changes the cell B1, only the subroutine B4 and B6 has to be called. Figure 15 shows the case when the user changes the cell B2, only the subroutine B5 and B6 has to be called. Thus, no unnecessary recalculations are done. However, there is some additional overhead with calling the function or subroutine, so this method is not always better than the linear one.

The linear method is simpler, but there are still unnecessary recalculations done. The tree-based system does not do any unnecessary recalculations. When the spreadsheets are very big or the target system has minimal computational resources, reducing the number of recalculations is important. This is typical the case for small remote devices like mobile phones or PDAs.

### Submodule Minimize code

Not all calculations in the original spreadsheet are needed in the target environment. Only the calculations that are between the input cells and the output cells are needed.
The following method describes how these calculations are found.
1. Let s be a set of cells. Initially s contains all the output cells.
2. Let r be a set of cells, r will contain all cells whose calculation is needed in the target environment. Initially r is empty.
3. For each cell c in s, continue until s is empty
   a. If c depends directly or indirectly on an input cell, add c to r, and add all cell which are referenced by c to s
   b. Else, let x be the value of the cell c, which has been calculated by the original spreadsheet. Use this value x in all calculations in r which refer to c.
   Only the set of cells r have to be compiled. The other cells contain useless calculations.
   A variant of the algorithm does not contain step 3b.

### Submodule Minimize size of runtime functions

Some of the functions in the run-time library are rather big, since there are many special cases that have to be handled.
However, if we know that some of these special cases cannot occur in this specific spreadsheet, we can use a simpler and smaller function instead.

### The process

In the following the method according to the present invention used for different applications will be discussed in detail.

### Target computing environments with user interface

Previously, we have shown that using the information available in the spreadsheet can automatically create the user interface. Next we will show a number of examples on how the result can be made accessible to the end users.

### Make spreadsheets accessable using HTML/JavaScript

Figure 16 shows the automatic process from spreadsheet program to the web browser. The end user uses the spreadsheet in his browser. The spreadsheet creator 1600 creates a spreadsheet using his favourite spreadsheet program 1601. The spreadsheet is compiled 1602 by using the method according to the present invention and the result is a combination of HTML and JavaScript. The HTML/JavaScript-file(s) is deployed on a web-server 1603. An end user 1605 uses his web-browser 1604 to access the HTML/JavaScript-file(s) on the web-server 1603, and the HTML/JavaScript-file(s) is downloaded to the browser as any other web-page. Now the end user 1605 can use the spreadsheet without having to have the original spreadsheet program.

How the spreadsheet is transferred from 1601 to 1602 and from 1602 to 1604 depends on the environment, but they can be any solution to transfer files, for example a shared file system, FTP, WebDAV, NFS. The protocol between the web-server 1603 and the web-browser 1604 is either HTTP or HTTPS. It depends on the security needed.
The web-browser can be any HTML-enabled device, for example a PC, a set-top box or an advanced mobile phone with an HTML-web-browser.

### Make spreadsheets accessible using WML/ WMLScript

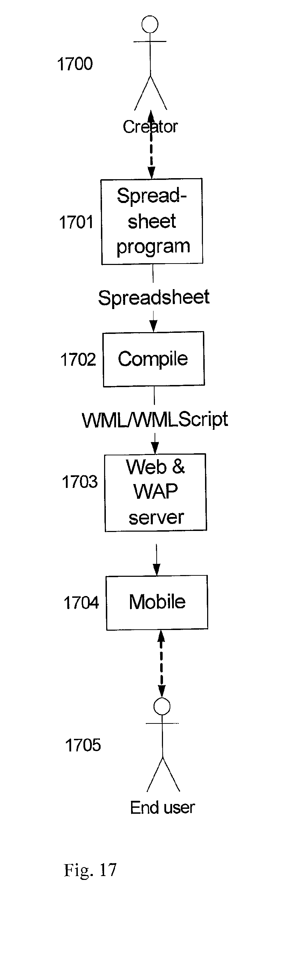

Figure 17 shows the automatic process from spreadsheet program to the WAP browser in a mobile phone. The end user uses the spreadsheet in his mobile phone or on another WAP-enabled device.

The spreadsheet creator 1700 creates a spreadsheet using his favourite spreadsheet program 1701. The spreadsheet is compiled 1702 by using the method according to the present invention and the result is a combination of WML and WMLScript. The WML/WMLScript-file(s) is deployed on a web-server and WAP-gateway 1703. An end user 1705 uses his mobile phone 1704 to access the WML/WMLScript-file(s) on the web-server and WAP-gateway 1703, and the WML/WMLScript -file(s) is downloaded to the mobile phone as any other WML-page. Now the end user 1705 can use the spreadsheet without having to have the original spreadsheet program.

The web-server and WAP-gateway 1703 can either be two separate systems or merged into one system. The webserver is responsible to supply the requested WML-pages, and the WAP-gateway compresses the WML-pages and makes sure that they arrive in the mobile phone. For example, if the WML-pages do not arrive or arrive corrupted, the WAP-gateway will resend them.

### Make spreadsheets accessible via email

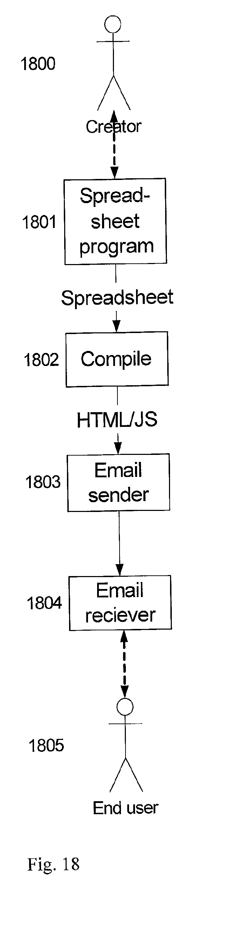

Email programs like Microsoft Outlook 2000 can handle emails consisting of HTML with embedded JavaScript. This can be used to make a spreadsheet accessible to an end user, by using the method according to the present invention to create an HTML/JavaScript version and email it to the end user. The end user can directly use the spreadsheet within his email program. Figure 18 shows the automatic process from spreadsheet program to an email reader.

The end user uses the spreadsheet in his browser. The spreadsheet creator 1800 creates a spreadsheet using his favourite spreadsheet program 1801. The spreadsheet is compiled 1802 by using the method according to the present invention and the result is a combination of HTML and JavaScript. The HTML/JavaScript-file(s) is email using an email sender 1803. An end user 1805 uses his email reader 1804 to read the email consisting of the HTML/JavaScript-file(s). Now the end user 1805 can use the spreadsheet without having to have the original spreadsheet program.
The protocol between the email sender 1803 and the email reader 1804 depends on the email infrastructure.
One advantage of making the spreadsheet available thru email instead of using a web browser is that email will also work when the end user is off-line, i.e. when the end user is not connected to the Internet.
Which target computing environments that can be used by the end user to read and manipulate the spreadsheet depends on the capacity of the email reader. Even some advanced mobile phones do support HTML/JavaScript-enabled emails.

### Make spreadsheets accessible thru short messaging

Short messaging is just to send messages directly to a mobile phone; the most common today is SMS, which in Europe is restricted to 155 characters.
However, an enhanced version called MMS, which will allow much larger messages, is currently introduced into the market.
The initial uses of MMS are sending pictures and melodies. The MMS architecture allows the mobile phone vendors to handle more types of messages, for example WML/WMLScript.
This means that a short message containing the spreadsheet can be sent to end user and the end user can manipulate the short message in his mobile phone. The short message will be kept in his short message inbox until the end user decides to delete it. Thus, the spreadsheet has only to be distributed once.

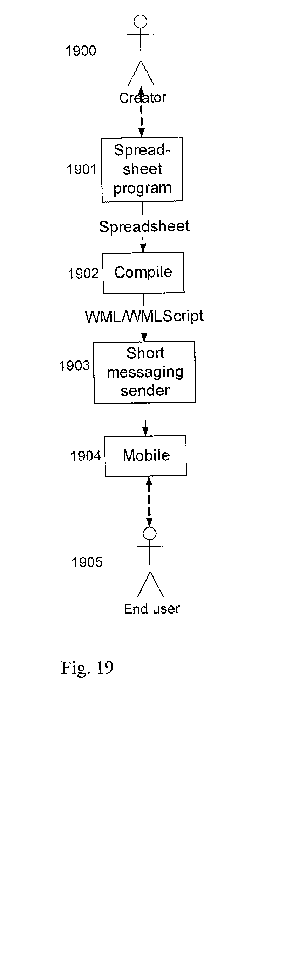

Figure 19 shows the automatic process from spreadsheet program to the short messaging inbox in a mobile phone. The end user uses the spreadsheet in his mobile phone.

The end user uses the spreadsheet in his browser. The spreadsheet creator 1900 creates a spreadsheet using his favourite spreadsheet program 1901. The spreadsheet is compiled 1902 by using the method according to the present invention and the result is a combination of WML and WMLScript. The WML/WMLScript-file(s) is an email using a short message sender 1903. An end user 1905 uses his mobile phone 1904 to read the short message consisting of the WML/WMLScript-file(s). Now the end user 1905 can use the spreadsheet without having to have the original spreadsheet program.

As will become evident in connection with the so-called round-trip application, described below, each of the scenarios in figures 16-19 may include a return branch where a filled in spreadsheet is return to an interested party.

### Other techniques

The different embodiments of the present invention presented above are also applicable to other technologies, for example for mobile phones:
- IMODE from the Japanese telecom operator DOCOMO is very similar to WML/WMLScript but uses a restricted form of HTML instead.
- GPRS
- One-way and two-way pagers.
- Enhanced versions of HTML, for example XHTML.

Also, alternatives to HTML and WML are suggested.
- XForms (http://www.w3.org/MarkUp/Forms/) is one. Its goal is to support handheld, television, and desktop browsers, plus printers and scanners with a Richer user interface to meet the needs of business, consumer and device control applications.
- Adobe PDF. JavaScript can be embedded into a PDF-file. This means that a PDF document with built-in interactivity can be created directly from a spreadsheet using the method according to the present invention.

### Target computing environments without user interface

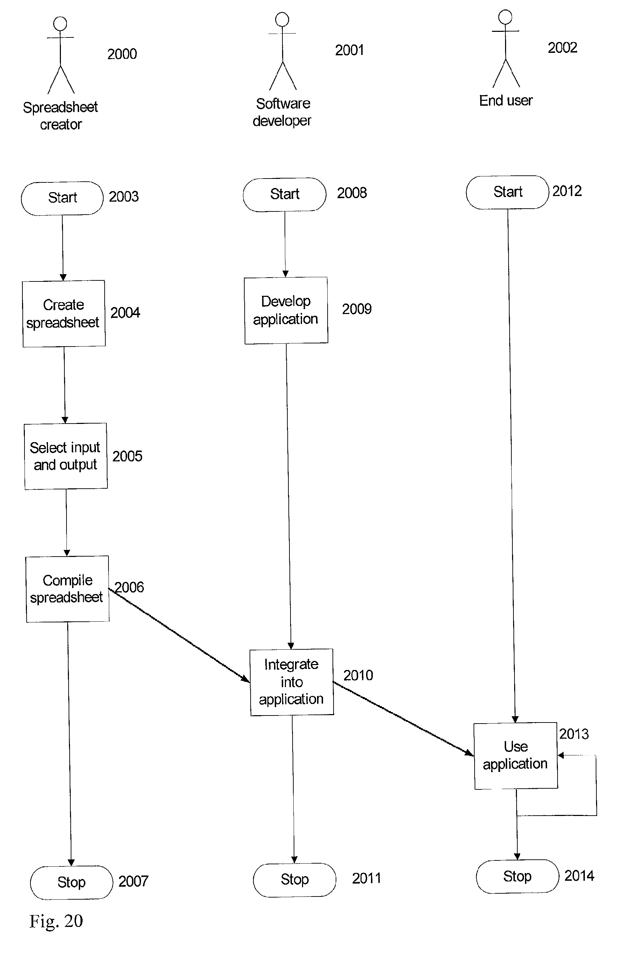

Figure 20 shows how the creator 2000 of the spreadsheet lets the software developer 2001 integrate the spreadsheet into an application that is used by the end user 2002. The spreadsheet creator 2000 creates in step 2004 the spreadsheet, decides in step 2005 which of the cells or ranges are input and output, and in step 2006 the creator compiles the spreadsheet using the method according to the present invention. In the meantime the software developer 2001 has developed the rest of the application 2009, and in step 2010 the developer integrates the result of the compilation into the application. When the application is finished it is deployed and in step 2013 used by the end user.

### Creating Web Services automatically from spreadsheets

Web services are self-contained, modular business process applications, which are based on open, Internet standards. Using the technologies of WSDL (to describe), UDDI (to advertise and syndicate), and SOAP (to communicate), Web services can be mixed and matched to create distributed applications.
Web Services Description Language (WSDL) is an XML-based description of how to connect to a particular web service. A WSDL description abstracts a particular service's various connection and messaging protocols into a high-level bundle and forms a key element of the UDDI directory's "green pages." Universal Description, Discovery, and Integration (UDDI) represent a set of protocols and a public directory for the registration and real-time lookup of web services and other business processes.
Simple Object Access Protocol (SOAP) is a protocol for messaging and RPC style communication between applications. It is based on XML and uses common Internet transport protocols like HTTP to carry its data.
Typical uses of Web Service will be B2B-solutions, for example to make price calculators available to computer applications hosted at the customers.

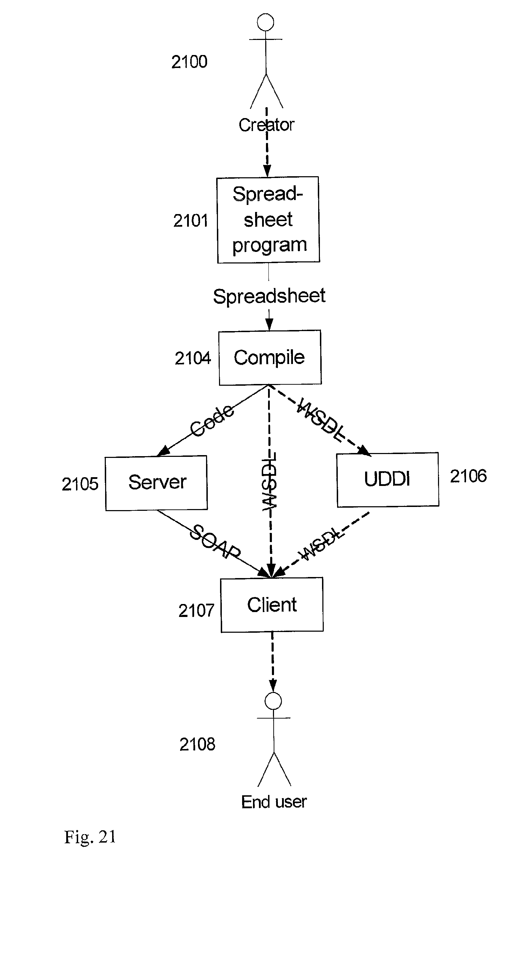

Figure 21 shows how the creator 2100 of the company supplying the Web Service, creates the spreadsheet 2101, puts the resulting code 2104 on a server 2105 accessible from the clients, and publishes the WSDL-description on UDDI 2106. The customers/client 2107 can now build applications using the Web Service and make them accessible to end users 2108.
Using UDDI is an option; alternatively, the WSDL-description is directly made available to the client.

### Round-trip: Gather the end users input in a central location

According to an alternative embodiment of the present invention values entered by an end-user can be fed back into the original spreadsheet. This is very advantageous in that it greatly simplifies the gathering of data. Examples of this kind of use are:
- Survey: A number of questions are formulated in a spreadsheet. It is made accessible to end-users and their answers are gathered and consolidated to be used by the original spreadsheet creator (or by another party).
- Time tracker: The manager creates a spreadsheet that lets the employees fill in how much work has be done the last month and how much of this is billable. All answers are gathered and consolidated in order to be used by e.g. the original spreadsheet creator.
- Expense report: The human resources department creates an expense report as a spreadsheet. It is made accessible to end users and each time an employee fills in an expense report, the numbers are gathered and consolidated into a spreadsheet at human resources. By the end of the month, each employee is reimbursed for the expenses.
- A simple ordering system: A set of products is entered into a spreadsheet. The user can select some and the spreadsheet calculates the prices. The spreadsheet can also do other things, for example validating the solution and calculating other values, for example shipping cost. This spreadsheet is made accessible in the remote target computing environment, and the user can make orders using the spreadsheet. The orders are gathered by the original spreadsheet creator, and the orders are shipped.

We start with a spreadsheet, make the spreadsheet accessible to everyone on a diverse set of computing platforms, and then gather and consolidate all the data in the original spreadsheet.

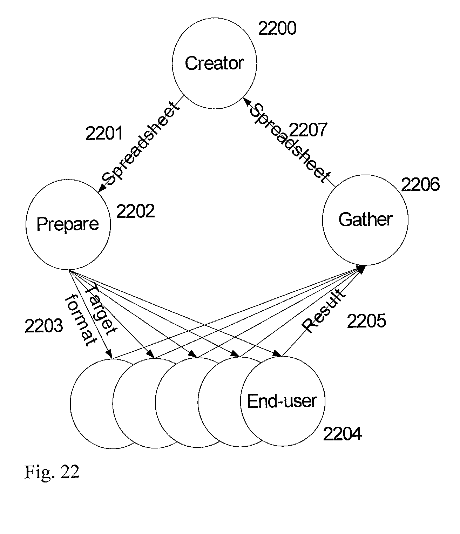

Figure 22 shows a flowchart illustrating the overall process according to the alternative embodiment of the present invention. The creator 2200 uses a spreadsheet program to create the spreadsheet 2201. The spreadsheet 2201 is compiled according to the present invention as previously described 2202 into a format suitable to the target computing environment, and the result 2203 is made accessible to one or many end users 2204. Each of these end users uses the spreadsheet in their local target computing environment, and when all requested values are filled in, the end users 2204 send their individual values 2205 to a system 2206. The system 2206 gathers all the data and compiles it into a spreadsheet. This spreadsheet 2207 is made accessible to the original creator of the spreadsheet (or to another interested party). Either the spreadsheets 2207 and 2201 are merged into one spreadsheet, or they are kept as two separate spreadsheets.

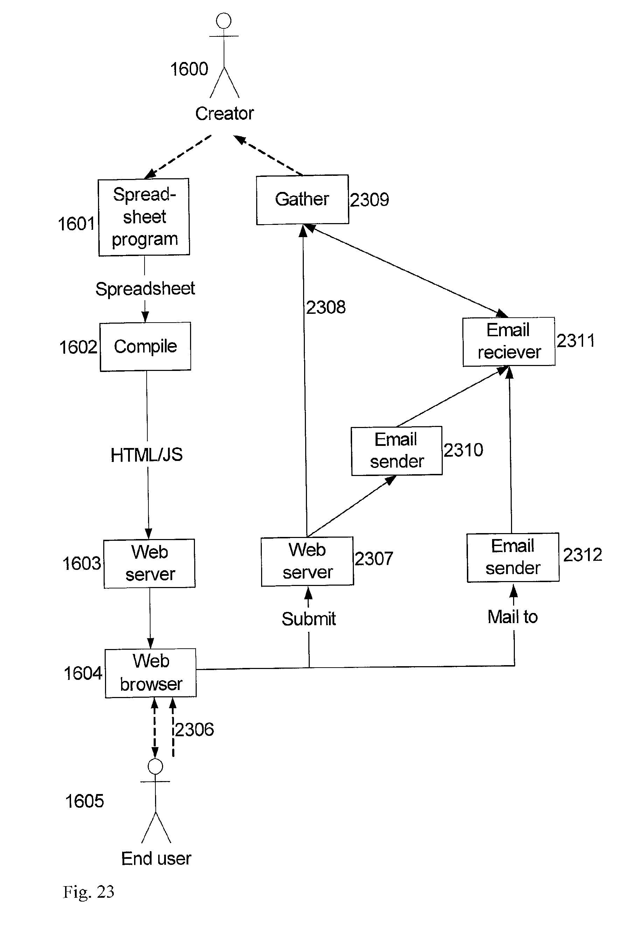

Figure 23 shows three different ways to get the data back when the end user is using a web browser. The steps 1601 to 1605 have been described in connection to figure 16. The end user fills in the spreadsheet in the web browser (2306) and decides to send the data back to the creator of the spreadsheet. There are three typical alternatives:
1. Submit the data to a web server 2307 using HTTP-Get or HTTP-Post. The data is the accessed by the gathering device 2309 over an arbitrary file transfer protocol 2308.
2. Submit the data to a web server 2307 using HTTP-Get or HTTP-Post. The data is then sent as an email using an email sending device 2310 to an email receiving device 2311. The gathering device 2309 reads the data from the email receiver 2311.
3. The web browser sends an email with the data directly using an email sender 2312 located on the same remote target computing environment to an email receiving device 2311. The gathering device 2309 reads the data from the email receiver 2311.
When the gathering device 2309 has received the data, it is compiled and made accessible to the spreadsheet creator 2300 or to any other user or system that needs the data.
Which alternative is the best, depends for example on security. If alternative 1 or 2 is going to be used for arbitrary users on the Internet, the web servers must be publicly available. Alternative 3 assumes that the web browser can send an email directly or with help of an email sender on the same remote target computing environment.
Note that web servers 1603 and 2307 can be the same web server, or can be different web servers.
Figure 23 is also applicable when the user is using a WAP-enabled device like a mobile phone, as described in connection to figure 19. A WAP-enabled device can submit data to a Web and WAP server. Also, complete email programs are built-in in some advanced mobile phones.
Figure 23 illustrates also the case when the user is using an email client as described in figure 18. The email program 1804 is both an email receiver and an email sender, so there is in that case no need for the separate device Email sender 2312.
The techniques described are also applicable on Java-enabled remote target computing devices like a PC with Sun J2SE or a mobile phone with J2ME, since a Java-enabled device both can submit requests to a web server, and send emails.

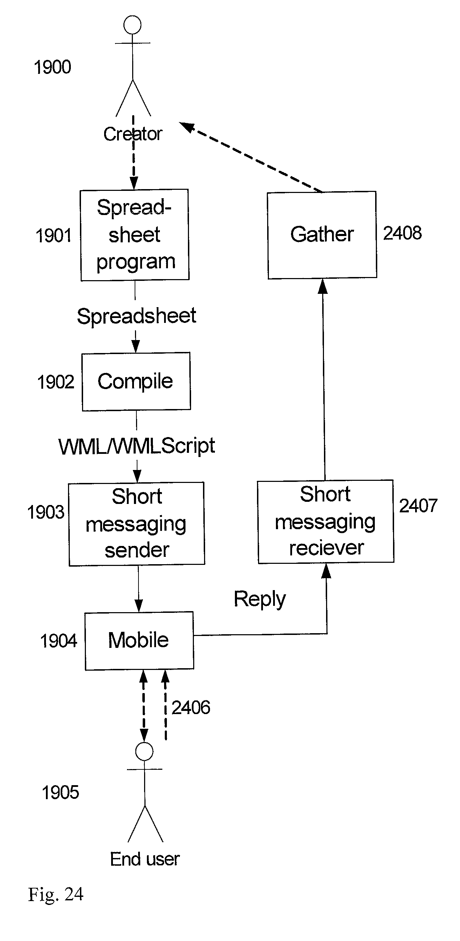

Figure 24 shows how to handle the case described in connection to figure 19 where steps 1900 to 1905 already have been described. The end user uses the spreadsheet as any other short messaging message. When the end user decides to send data back, he replies on the message, and fills in the details 2406. The message is sent and received by the short messaging receiver 2407. The data is the accessed by the gathering device 2408. The data is compiled and made accessible to the spreadsheet creator 1900 or to any other user or system that needs the data.

One advantage of making the spreadsheet available thru email instead of using a web browser is that email will also work when the end user is off-line, i.e. when the end user is not connected to the internet.

The present invention is not limited to the above-described preferred embodiments. Various alternatives, modifications and equivalents may be used. Therefore, the above embodiments should not be taken as limiting the scope of the invention, which is defined by the appending claims.

## Claims

1. Method in connection with spreadsheet programs wherein a spreadsheet is created by a creator (100) on a computer having a display means, an entry device, and a processor for executing the spreadsheet program, said method is adapted to make the spreadsheet accessible to a user (101) provided with a target computing environment device, and comprises the following step:
a) compiling (103) the created spreadsheet in said computer by, in addition to conventional compilation, using a set of submodules, so that the compiled spreadsheet is a representation of the spreadsheet for the target computing environment, wherein said representation enables a user to use the created spreadsheet in the target computing environment device without using the spreadsheet program.

2. Method according to claim 1, **characterized in that** said method comprises the following steps performed after step a):
b) transferring (104) the compiled spreadsheet to the target computing environment device, and
c) enabling said remote user to use (105) the created spreadsheet, by using a target processing means in the target computing environment device without using the spreadsheet program.

3. Method according to claim 2, **characterized in that** said target computing environment uses a web browser as target processing means using HTML with embedded JavaScript to do the calculations.

4. Method according to claim 2, **characterized in that** said target computing environment uses a WAP-browser as target processing means using WML to present the result and with embedded WMLScript to do the calculations.

5. Method according to claim 2, **characterized in that** said target computing environment uses a Java enabled device as target processing means using Java to do the calculations and the user interface.

6. Method according to claim 1, **characterized in that** the compilation step is automatically performed.

7. Method according to claim 2, **characterized in that** a run time library comprising functions in said spreadsheet is transferred together with said compiled spreadsheet.

8. Method according to claim 1, **characterized in that** said set of submodules includes a typing submodule adapted to infer types of spreadsheet cells to determine if the cell includes a string and/or a number and/or a Boolean in order to be able to compile it efficiently in a typed programming language.

9. Method according to claim 8, **characterized in that** if the typing submobdule cannot determine the type of the spreadsheet cell conversions are introduced into the representation.

10. Method according to claim 8, **characterized in that** if the typing submobdule cannot determine the type of the spreadsheet cell the contexts of all involved type requirements are used to create an error message that is presented to the creator.

11. Method according to claim 1, **characterized in that** said set of submodules includes a generate array access submodule adapted to represent the spreadsheet by using a set of variables, vectors and arrays.

12. Method according to claim 7 and 11, **characterized in that** said set of submodules includes a minimize runtime support submodule where the number of functions in said run time library is minimized by optimizing the use of variables, vectors and arrays to represent the spreadsheet.

13. Method according to claim 1, **characterized in that** said set of submodules includes a generate math submodule that handles error codes generated in the spreadsheet by mapping the error values to a single value "not a number" (NaN).

14. Method according to claim 7 and 13, **characterized in that** the run time library handles the NaN.

15. Method according to claim 1, **characterized in that** said set of submodules includes a retain meta level submodule that introduces specific function(s) that maps cell references to cell values and/or cell positions.

16. Method according to claim 2, **characterized in that** said set of submodules includes a submodule that embeds calculations within a user interface and is adapted to automatically generate a user interface that may be used in the target computing environment device.

17. Method according to claim 16, **characterized in that** the user interface looks like a spreadsheet and that the representation implements the validation and formatting of the original spreadsheet.

18. Method according to claim 2, **characterized in that** said set of submodules includes a generate component or class submodule that creates a source code representation that can be directly used within a programming environment.

19. Method according to claim 2, **characterized in that** said set of submodules includes a generate component or class submodule that creates an object code representation that can be directly used within the target computing environment.

20. Method according to claim 19, **characterized in that** said object code representation is generated for the Java virtual machine (JVM).

21. Method according to claim 19, **characterized in that** said object code representation is generated for the Microsoft Intermediary Language (MSIL).

22. Method according to claim 1, **characterized in that** said set of submodules includes a quality assurances submodule that generates test code that validates that the values calculated by the representation are the same as the ones calculated by the original spreadsheet.

23. Method according to claim 1, **characterized in that** said set of submodules includes a minimize recalculation submodule that splits the generated code and groups it according to the recalculation order required to calculate the values of the spreadsheet in order to only execute the necessary parts when performing the calculation.

24. Method according to claim 23, **characterized in that** said code is generated as a linear code.

25. Method according to claim 2, **characterized in that** said method comprises the following steps to be performed when one or many user(s) have received and used the spreadsheet by entering data in the spreadsheet:
d) processing the data entered in the spreadsheets in order to form one or many resulting spreadsheet(s),
e) providing said resulting spreadsheet(s) to a party requesting the entered data.

26. Computer program product stored on a computer usable medium, comprising readable program adapted to control the execution of the compilation step in the method according to any of claims 1-25.

27. Computer program product directly loadable into an internal memory of a computer comprising program code portions adapted to control the execution of the compilation step in the method according to any of claims 1-25.
